Europäisches Patentamt

European Patent Office

Office européen des brevets

(11) Publication number: **0 076 261**
**B1**

# EUROPEAN PATENT SPECIFICATION

(45) Date of publication of patent specification: **19.02.86**

(21) Application number: **81902662.6**

(22) Date of filing: **15.04.81**

(86) International application number:
**PCT/DK81/00039**

(87) International publication number:
**WO 82/03529 28.10.82 Gazette 82/26**

(51) Int. Cl.⁴: **A 01 G 9/02,** A 01 G 31/00,
A 01 G 31/02

(54) **A METHOD OF GROWING PLANTS, AND A GROWING BAG FOR USE BY THE METHOD.**

(43) Date of publication of application:
**13.04.83 Bulletin 83/15**

(45) Publication of the grant of the patent:
**19.02.86 Bulletin 86/08**

(84) Designated Contracting States:
**FR**

(56) References cited:
**AT-B- 313 628**
**DE-A-2 027 851**
**FR-A-1 357 840**
**FR-A-1 519 499**
**FR-A-1 540 887**
**FR-A-2 340 877**
**GB-A-2 018 114**
**NO-B- 115 766**
**US-A-4 149 339**

(73) Proprietor: **BENTLE PRODUCTS AG**
**Grabenstrasse 1 Postfach 409**
**CH-6301 Zug (CH)**

(72) Inventor: **AHM, Poul Henrik**
**33-9.A, Paseo Maritimo**
**Malaga 16 (ES)**

(74) Representative: **Ayache, Monique**
**CABINET PLASSERAUD 84, rue d'Amsterdam**
**F-75009 Paris (FR)**

Courier Press, Leamington Spa, England.

## Description

### Technical field

The present invention relates to a method of growing plants, whereby a porous growth substrate surrounded by a plastic film in the form of a bag is used for developing the roots, whereas the plant stem extends through an opening in the bag, and whereby the growth substrate is continuously supplied with water containing the additives necessary for the growth of the plants, said water leaving the bag through one or more openings therein in the opposite end thereof relative to the opening through which the stem extends.

### Background art

A method of this type is known from an article in "Supplement to the Grower" from 24th August 1978 with the headline "Peter Bailey's drip system—cheap hydroponics", in which an amendment of the nutrient film technique (NFT) is described, which inter alia is used when cropping cucumbers.

The method described in the above article is based on a system known in Scandinavia using rock wool as growth substrate, and which is characterised by the base of the bags having a considerable slope. However, the method dealt with in the article does not employ steep slope of the base of the bags, and furthermore it avoids the use of rock wool. Instead a 2.5 cm layer of peat-moss litter is used or a capillary mat of a corresponding thickness, on which the plants in pots are placed for watering either from the top or from the bottom side by means of the capillary mat. The water is supplied through dripping either to the pots or to the mat, and as a consequence of the sloping base for the mat, the surplus water leaks out from the mat and runs through slits in the surrounding plastic sheet and further into a gulley.

Furthermore, an article in Financial Times on 11th June 1979 discloses a method, whereby growing bags located on a slightly sloping base are used for cropping for instance cucumbers and tomatoes. The bags may be filled with peat compost which is light and clean. This is equally true of pulverised bark which many regard as a more desirable medium since it is available in almost endless amounts, whereas peat is a natural soil which is available in a finite supply.

Recently, a dehydrated "board" of compost has been tested, which only weighs about 3.5 kg and consequently is very easy to transport. It turned out that when wetted with about 18 l of water, the board expands into a growing bag of an appropriate size in such a manner that when using a 1.2 m long bag it is possible to grow 4 tomato plants in a single growing bag.

An essential problem by using such growing bag is, however, that the growth substrate must possess an essential water retentiveness in order to maintain the growth substrate moistened thoroughly. Furthermore, such a water retentiveness retards the continuous exchange of water, whereby partly an insufficient supply of the nutrients and oxygen necessary for the growth of the plants to all the parts of the root system arise, partly a putrefaction may occur in the parts of the growth substrate wherein the supply of oxygen is insufficient.

DE—A—2,723,435 discloses a bag-shaped growing unit containing a granular plant growth substrate comprising plant soil or other growth substrates ready for use and which by addition of water with or without the addition of nutrients are made swelling.

AT—B—313 628 discloses a device for hydrophonic cultivation of plants consisting of a rooting space surrounded by a membrane preferably formed like a tube, and a room for the sprout, said rooting space containing a carrier material for the plant. The carrier material contains foam made from plastics material, and supply of nutrient liquid takes place by periodically immersing the perforated rooting space into the liquid solution containing the nutrients, or alternatively the rooting space forms part of a supply system for nutrient liquid in order to supply a number of plants with nutrient liquid.

These known growing bags are, however, encumbered with the serious draw-back that they do not permit a continuous and automatically controlled supply of water and nutrients to the plant growth in connection with a recirculation of the watering water. The presence of soil and consequently of soil bacteria involves a serious risk of infection of all the plants in case they were watered by means of a common watering system. Moreover the use of a hydrophilic growth substrate capable of swelling has turned out to imply root putrefaction as a consequence of an insufficient supply of air. Upon the swelling it is not possible to carry out the exchange of water, said exchange ensuring the necessary supply of both oxygen and nutrients. Furthermore it turned out that the water is bonded so strongly to the hydrophilic growth substrates used in practice that in reality the major portion thereof is not available to the plant growth in such a manner that it may be absorbed by the plant roots.

### Disclosure of invention

It turned out to be possible to obtain an improved water flow through the bag and consequently an improved supply of nutrients and oxygen to the plant roots, when the water passing through the growing bag follows a slope heavily inclining relative to the horizontal plane, and when an appropriately hydrophobic material is used as growth substrate, and the method according to the invention is characterised in that the watering water is percolated through a non-hydrophilic, non-soil containing sheet of the growth substrate cut to the shape of the bag which is suspended with the plane of the sheet in a vertical orientation, the watering water is collected from below the bottom of the bag and recirculated to the sheet of growth substrate through the top opening of the bag through which the plant stem grows.

The vertical orientation of the growing bag provides through the effect of gravity an appropriately quick percolation of the nutrient solution supplied through the growth substrate, and in this manner an excellent contact between the root portions of the plant and the nutrient solution is obtained. This implies that the concentration of nutrients in the watering water may be reduced to about 0.8°/00 compared to about 2°/00 by the known methods, whereby the growth of plants is carried out with the growing bag oriented with a slightly inclining slope relative to the horizontal plane.

The low concentration of nutrients implies that the need of observance of definite quantitative ratios of the various nutrients to each other in the watering solution is considerably reduced. The plant roots absorb the nutrients and the amount of oxygen necessary for the plant, and the low concentration reduces the risk of damage of the roots as a consequence of a too high osmotic pressure, and moreover the low concentration implies less requirements to the control of the composition of the nutrient solution. The re-use of the watering water permits an efficient utilization of the added nutrients.

From the bottom of the bag the watering water preferably flows downwards into a gulley leading to a collecting tank, in which the content of oxygen and nutrients may be controlled and continuously supplemented. From the collecting tank the water is lead to supply pipes located above the plants, supply tubes extending therefrom to the individual growing bags. The recirculation ensures a minimum loss of fertilizers from the nutrient solution, and the nutrient solution may be adjusted at the optimal temperature at the supply. The supply of the nutrient solution is preferably carried out through drip watering.

Through a continuous analysis of the recirculated water, the content of nutrient salts and other additives necessary for the growth of the plants may be maintained at a level optimal for the growth of plants according to the growing step the plants have reached at any time.

A carefully controlled supply of water and nutrients contained in the watering water for the plants has proved to imply great possibilities of cropping for instance tobacco in places not previously applicable for this purpose.

The method according to the invention thus ensures the necessary supply of micro substances such as iron, copper, molybdenum, boron, manganese, and zinc to the plants, and deficiency symptoms deriving from deficiency of the macro substances potassium, phosphorus, and nitrogen are avoided.

Examples of crop-yielding plants, which are advantageously grown by the method according to the invention, are tomato, cucumber, pepper, melons, and beans, but ornamental plants such as for instance poinsettia and carnation may also be grown by the method according to the invention.

In an embodiment of the method according to the invention the plant growing bag containing the growth substrate is used suspended in a string simultaneously forming a support for the plant and its crop. As a result a simultaneous hold of the growing bag and binding up of the plant with its crop is obtained, and through an appropriate securing of the suspension string, e.g. in a horizontally extending steel wire, a possibility of an easy move and transport of the plants is obtained in such a manner that the growth volume available may be utilized to a maximum.

The invention furthermore deals with a growing bag for use by the method.

The growing bag is formed by a plastic bag with an opening for the plant stem at one end and one or more openings at the other end and containing a porous growth substrate. The bag according to the invention is characterised in that the bag is adapted and shaped for vertical suspension and for collecting watering water through the one or more openings in the opposite to the opening for the plant stem, and recirculating watering water to the growth substrate through the opening for the plant stem, and in that the growth substrate is cut to the shape of the plastic bag from a non hydrophilic web material not containing soil with the plane of the sheet in a vertical orientation.

The vertical suspension of the bag may be carried out in several different ways, e.g. by shaping an opening in a welded portion of the two plastic sheet layers of the bag. The opening may also extend through the two sheet layers below an upper welded edge or rim, but the growing bag is preferably characterised in that at the top adjacent the opening for the plant stem it comprises a transverse opening for a suspension string.

The plastic film for preparing the growing bag in question preferably comprises the so-called milk bag plastics white on one side and black on the opposite side and the white side is used as the outer side of the bag. A plastic film one side of which (the outer side) is aluminium coloured, and the opposite side of which (the inner side) is black, is also suitable.

The growing bag according to the invention is preferably formed by two quadrangular, preferably rectangular layers of plastics joined along their circumference. The joining may be performed through welding, and thereby a simple and economical manufacture of the bag in question is obtained.

In a second embodiment the bag is formed by two triangular layers of plastics joined along their circumference, and which in the suspended position of the bag form an isosceles triangle, the base line of which is horizontal. Such a shaping of the bag renders it possible to grow plants, the root system of which as to extension develops very strongly downwards.

In an additional embodiment of the growing bag of the invention, the growth substrate is a mat corresponding to the shape of the bag and made being of glass wool, rock wool, or foamed plastic or woven or non-woven fibre containing textile material.

It turned out that textile material in the form of the so-called Plant-Fibertex® distributes the water particularly well through the entire material. By choosing such a material for the growth substrate in the bag according to the invention, a complete wetting right through the content of growth substrate in the entire bag is ensured.

Growing bags containing Plant-Fibertex® as growth substrate may be manufactured through rim welding of two layers of plastics of the above type, whereby two corners diagonally opposite each other are cut in such a manner that 2—3 cm long openings are provided. Through these openings a plant stem may grow since the bag is formed with a transverse opening for a suspension string in both ends, whereby it is of no importance whether the bag is suspended in one opening or the other. The cut opening at one end of the bag, which at the suspension turns downwards, hereby serves as outlet opening for the percolating water. It is preferred to form a 2—3 cm long welding at the cut corners of the bag and in connection with the actual rim welding in such a manner that a channel is formed, in which a tube for the watering water may be secured.

In a further embodiment of the growing bag whereby the growth substrate is foamed plastic, the growth substrate is a sheet of resilient polyurethane foam of a thickness of about 0.5—1.0 cm and a shape corresponding to the shape of the bag, and that the polyurethane foam has a density of 40—60 kg/m$^3$. Such a growing bag may be characterised in that the growth substrate is a sheet of a thickness of about 0.5 cm and made of resilient polyurethane foam which in the suspension direction of the bag is about 40 cm long and in horizontal direction about 20 cm wide, that the density of the polyurethane foam is about 50 kg/m$^3$, that the flattened bag is about 44 cm long and about 25 cm wide, and that the joining of the bag at the bottom is limited to two weldings mutually spaced. Such a growing bag has turned out to be suitable for most crop-yielding plants.

The vertical orientation of the plastic bag of the invention is conditioned by the use of a porous growth substrate, which in the wetted condition fills out the bag and does not collapse, which would happen for a for instance dehydrated "board" of compost or a soil-containing material. It is, however, possible to fold the growing bag of the invention along vertical lines in the suspended position of the bag, whereby at the early growth step of the plant it is possible to collect the growing bags and consequently to obtain a saving of space, which moreover has a favourable effect on the consumption of heat for the growth of plants.

By the method of the invention the known advantages by soil-less growth of plants are obtained, i.e. avoiding diseases deriving from soil bacteria and an efficient control of the supply of water, nutrients, and oxygen for the plants. As a result it turned out that it for instance was possible to grow lettuce with a considerably lower content of nitrite than it had been possible when growing lettuce in soil under usual growing conditions.

Best mode of carrying out the invention

The watering of the plants which is performed through supply of water to the growth substrate in the bags, is preferably performed automatically and by means of known devices such as the so-called "volmatic" not a Trade Mark)-watering system. The plants which on account of the suspension are easy to move, are removed from each other along with the growth and according to their gradually increasing space requirement. Since the evaporation of water during the growth of the plants is reduced to a minimum, an essential water saving is obtained by the method according to the invention, and compared to corresponding growing on soil, the water saving is about 60—75%. A corresponding saving is obtained concerning the consumption of nutrients added to the watering water. When the growing bags are suspended and the watering system is mounted, the work in connection with the method according to the invention is furthermore very restricted compared to the traditional growth in soil.

In Denmark and countries with similar climatic conditions, the growing bag according to the invention may as previously mentioned be used for growing plants such as tomatoes, cucumbers, pepper, melons etc., but it is to be expected that the growing bag according to the invention under appropriate climatic conditions may be used for growing for instance tobacco for wrappers.

**Claims**

1. A method of growing plants, whereby a porous growth substrate surrounded by a plastic film in the form of a bag is used for developing the roots, whereas the plant stem extends through an opening in the bag, and whereby the growth substrate is continuously supplied with water containing the additives necessary for the growth of the plants, said water leaving the bag through one or more openings therein in the opposite end thereof relative to the opening through which the stem extends, characterised in that the watering water is percolated through a non-hydrophilic non-soil containing sheet of the growth substrate cut to the shape of the bag which is suspended with the plane of the sheet in a vertical orientation, the watering water is collected from below the bottom of the bag and recirculated to the sheet of growth substrate through the top opening of the bag through which the plant stem grows.

2. A method according to claim 1, characterised in that the plant growing bags containing the growth substrate are used suspended on a string simultaneously forming the hold for the plant and the crop thereof.

3. A growing bag formed by a plastic bag with an opening for the plant stem at one end and one or more openings in the opposite end and containing a porous growth substrate, for use by the method according to claim 1 or 2, characterised in that the bag is adapted and shaped for vertical suspension and for collecting watering water falling through the one or more openings in the opposite end to the opening of the plant stem, and recirculating watering water to the growth substrate through the opening for the plant stem, and in that the growth substrate is cut to the shape of the plastic bag from a non hydrophilic sheet material not containing soil with the plane of the sheet in a vertical orientation.

4. A growing bag according to claim 3, characterised in that the bag is made of a light-impenetrable, preferably light-reflecting material.

5. A growing bag according to claim 4, characterised in that the bag at the top adjacent the opening for the plant stem comprises a transverse opening for a suspension string.

6. A growing bag according to claim 4 or 5, characterised in that the bag is formed by two quadrangular, preferably rectangular layers of plastics joined along their circumference.

7. A growing bag according to claim 4 or 5, characterised in that the bag is formed by two triangular layers of plastics joined along their circumference, and which in the suspended position of the bag form an isosceles triangle, the base line of which is horizontal.

8. A growing bag according to claim 6 or 7, characterised in that the growth substrate is a mat corresponding to the shape of the bag and preferably being of glass wool, rock wool or foamed plastic or woven or non-woven fibre-containing textile material.

9. A growing bag according to claim 6 or 7, whereby the growth substrate comprises foamed plastic, characterised in that the growth substrate is a sheet of resilient polyurethane foam of a thickness of about 0.5—1.0 cm and a shape corresponding to the shape of the bag, and that the polyurethane foam has a density of 40—60 kg/m³.

10. A growing bag according to claim 6, whereby the growth substrate comprises foamed plastic, characterised in that the growth substrate is a sheet of a thickness of about 0.5 cm and made of resilient polyurethane foam, which in the suspension direction of the bag is about 40 cm long and in horizontal direction about 20 cm wide, that the density of the polyurethane foam is about 50 kg/m³, that the flattened bag is about 44 cm long and about 25 cm wide, and that the joining of the bag at the bottom is limited to two weldings mutually spaced.

## Revendications

1. Procédé de culture de plantes selon lequel on utilise un substrat poreux de culture environné d'un film plastique en forme de sac pour le développement des racines, tandis que la tige de la plante s'étend à travers une ouverture ménagée dans le sac et selon lequel le substrat de culture est alimenté en continu d'eau contenant les additifs nécessaires à la croissance des plantes, l'eau quittant le sac par une ou plusieurs ouvertures dans celui-ci placées à l'extrémité opposée par rapport à celle ou se trouve l'ouverture dans laquelle passe la tige, caractérisé en ce que l'eau d'arrosage percole à travers une feuille substrat de culture non hydrophile et ne contenant pas de sol, coupé selon la forme du sac qui est suspendu, le plan de la feuille étant orienté verticalement, l'eau d'arrosage est collectée en dessous du fond du sac et recyclée dans la feuille de substrat de culture par l'ouverture située en haut du sac, à travers laquelle pousse la tige de la plante.

2. Procédé selon la revendication 1, caractérisé en ce que les sacs de culture de plante contenant le substrat de culture sont utilisés en suspension sur une corde, formant simultanément le support pour la plante et ses fruits.

3. Sac de culture formé par un sac plastique ayant une ouverture pour la tige de la plante à une extrémité et une ou plusieurs ouvertures à l'extrémité opposée et contenant un substrat poreux de culture, utile dans le procédé selon la revendication 1 ou 2, caractérisé en ce que le sac est conçu et façonné pour être suspendu verticalement et pour permettre la récupération de l'eau d'arrosage s'écoulant à travers la ou les ouvertures placées dans l'extrémité opposée à l'ouverture servant à la tige de la plante, et le recyclage de l'eau d'arrosage dans le substrat de culture par l'ouverture servant à la tige de la plante, et en ce que le substrat de culture est coupé selon la forme du sac plastique à partir d'un matériau en feuille non hydrophile et ne contenant pas de sol, le plan de la feuille étant orienté verticalement.

4. Sac de culture selon la revendication 3, caractérisé en ce que le sac est constitué en un matériau qui ne laisse pas pénétrer la lumière et de préférence qui, réfléchit la lumière.

5. Sac de croissance suivant la revendication 4, caractérisé en ce que le sac comprend une ouverture transversale pour une corde de suspension, en haut et à côté de l'ouverture pour la tige de la plante.

6. Sac de culture selon la revendication 4 ou 5, caractérisé en ce que le sac est formé par deux couches de matière plastique quadrangulaires et de préférence rectangulaires, réunies le long de leur pourtour.

7. Sac de culture selon la revendication 4 ou 5, caractérisé en ce que le sac est formé par deux couches triangulaires de matière plastique réunies le long de leur pourtour, et qui, lorsque le sac est suspendu, forment un triangle isocèle dont la base est horizontale.

8. Sac de culture selon la revendication 6 ou 7, caractérisé en ce que le substrat de culture est un tapis correspondant à la forme du sac et constitué de préférence de laine de verre, laine de roche ou plastique moussé ou encore d'un matériau textile comprenant des fibres tissées ou non tissées.

9. Sac de culture selon la revendication 6 ou 7, dans lequel le substrat de culture comprend une matière plastique moussée, caractérisé en ce que le substrat de culture est une feuille d'une mousse de polyuréthane élastique ayant une épaisseur d'environ 0,5 à 1,0 cm et une forme correspondant à la forme du sac et que la mousse de polyuréthane a une densité de 40 à 60 kg/m³.

10. Sac de culture selon la revendication 6, dans lequel le substrat de culture comprend une matière plastique moussée, caractérisé en ce que le substrat de culture est une feuille d'une mousse de polyuréthane élastique ayant une épaisseur d'environ 0,5 cm, qui mesure environ 40 cm de long dans la direction de suspension du sac et environ 20 cm de large dans la direction horizontale, que la densité de la mousse de polyuréthane est d'environ 50 kg/m³, que le sac aplati mesure environ 44 cm de long et environ 25 cm de large, et que la réunion du sac au fond est limitée à deux soudures espacées l'une de l'autre.

## Patentansprüche

1. Verfahren zum Züchten von Pflanzen, wobei ein poröses von einem Kunststoffilm in Form eines Beutels umgebenes Wachstumssubstrat für die Wurzelentwicklung benutzt wird, wohingegen sich der Pflanzenstamm durch eine Öffnung in dem Beutel erstreckt und wobei dem Wachstumssubstrat kontinuierlich Wasser zugeführt wird, das die für das Pflanzenwachstum notwendigen Additive enthält, wobei das Wasser den Beutel durch eine oder mehrere Öffnungen in dem der Öffnung, durch welche sich der Stamm erstreckt, gegenüberliegenden Ende verläßt, dadurch gekennzeichnet, daß das Bewässerungswasser ein nicht-hydrophiles, nicht Erde enthaltendes Blatt des Wachstumssubstrates durchsickert, das zu der Form des Beutels geschnitten ist, der mit der Blattebene in vertikaler Ausrichtung aufgehängt ist, wobei das Bewässerungswasser unterhalb des Bodens des Beutels gesammelt und durch die obere Beutelöffnung, durch welche der Pflanzenstamm wächst, zu dem Blatt aus Wachstumssubstrat zurückgeführt wird.

2. Verfahren nach Anspruch 1, dadurch gekennzeichnet, daß die das Wachstumssubstrat enthaltenden Pflanzenzuchtbeutel an einem Faden, der gleichzeitig den Halt für die Pflanze und deren Frucht bildet, aufgehängt gebraucht werden.

3. Zuchtbeutel, gebildet aus einem Kunstoffbeutel mit einer Öffnung für den Pflanzenstamm an dem einen Ende und einer oder mehreren Öffnungen an dem gegenüberliegenden Ende sowie einem porösen Wachstumssubstrat, zur Verwendung bei dem Verfahren gemäß Anspruch 1 oder 2, dadurch gekennzeichnet, daß der Beutel zur vertikalen Aufhängung und zur Sammlung des durch einen oder mehrere Öffnungen in dem der Öffnung für den Pflanzenstamm gegenüberliegenden Ende fallenden Bewässerungswassers und zur Rezirkulation des Bewässerungswassers zu dem Wachstumssubstrat durch die Öffnung für den Pflanzenstamm hergerichtet und gestaltet ist, und daß das Wachstumssubstrat aus einem nichthydrophilen Blatt nicht Erde enthaltenden Materials mit der Blattebene in vertikaler Ausrichtung in die Form des Kunstoffbeutels geschnitten ist.

4. Zuchtbeutel nach Anspruch 3, dadurch gekennzeichnet, daß der Beutel aus einem lichtundurchlässigen, vorzugsweise lichtreflektierenden Material besteht.

5. Zuchtbeutel nach Anspruch 4, dadurch gekennzeichnet, daß der Beutel an der Spitze, naheliegend der Öffnung für den Pflanzenstamm, eine Queröffnung für einen Aufhängefaden enthält.

6. Zuchtbeutel nach Anspruch 4 oder 5, dadurch gekennzeichnet, daß der Beutel aus zwei viereckigen, vorzugsweise rechteckigen Kunststofflagen gebildet ist, die längs ihres Umfangs verbunden sind.

7. Zuchtbeutel nach Anspruch 4 oder 5, dadurch gekennzeichnet, daß der Beutel aus zwei dreieckigen Kunststofflagen, die längs ihres Umfanges verbunden sind und die in aufgehängter Beutellage ein gleichschenkliges Dreieck mit horizontaler Grundlinie bilden, gebildet ist.

8. Zuchtbeutel nach Anspruch 6 oder 7, dadurch gekennzeichnet, daß das Wachstumssubstrat eine der Beutelform entsprechende Matte ist und vorzugsweise aus Glaswolle, Steinwolle oder Schaumstoff oder gewebtem oder nichtgewebtem faserhaltigem textilem Material besteht.

9. Zuchtbeutel nach Anspruch 6 oder 7, wobei das Wachstumssubstrat Schaumstoff enthält, dadurch gekennzeichnet, daß das Wachstumssubstrat ein Blatt aus elastischem Polyurethanschaum mit einer Dicke von ca. 0,5 bis 1,0 cm und einer der Beutelform entsprechenden Form ist, und daß der Polyurethanschaum eine Dichte von 40 bis 60 kg pro m³ hat.

10. Zuchtbeutel nach Anspruch 6, wobei das Wachstumssubstrat Schaumstoff enthält, dadurch gekennzeichnet, daß das Wachstumssubstrat ein Blatt mit einer Dicke von ca. 0,5 cm ist und aus elastischem Polyurethanschaum besteht, das in Hängerichtung des Beutels ca. 40 cm lang und in horizontaler Richtung ca. 20 cm breit ist, daß die Dichte des Polyurethanschaumes ca. 50 kg pro m³ beträgt, daß der ausgebreitete Beutel ca. 44 cm lang und ca. 25 cm breit ist, und daß die Verbindung am Beutel-Boden auf zwei gegenseitig beabstandete Verschweißungen beschränkt ist.